# EUROPEAN PATENT SPECIFICATION

(11) **EP 0 879 673 B1**
(45) Date of publication and mention of the grant of the patent: **09.01.2002**
(21) Application number: 98500114.8
(22) Date of filing: 08.05.1998
(51) Int. Cl.: B23Q 5/04, F16H 57/02, B23Q 1/01

(54) **Divisible gearbox in a lathe**
Ein teilbarer Getriebekasten in einer Drehbank
Boîte de vitesse divisible dans un tour

(30) Priority: 21.05.1997 ES 9701091
(43) Date of publication of application: 25.11.1998
(73) Proprietor: Danobat, S. Coop., 20870 Elgoibar (Guipuzcoa) (ES)
(72) Inventor: Vicario Burgos, Angel, 20870 Elgoibar (Gipuzkao) (ES)

(56) References cited:
- EP-A- 0 517 387
- DE-A- 3 226 105
- SU-A- 604 633
- SU-A- 677 823
- PATENT ABSTRACTS OF JAPAN vol. 004, no. 176 (M-045), 5 December 1980 (1980-12-05) -& JP 55 125961 A (OBATA MASAO), 29 September 1980 (1980-09-29)

## Description

The present invention relates to a lathe or milling machine gearbox with a train of several successive shafts of gear wheels, part of which can be separated for removal from the machine.

### PRIOR ART

Known vertical lathes or milling machines with the work-piece headstock fixed to the machine bed have the gearbox gear train housed inside the front of the machine frame from which the headstock casing protrudes, fitted with a removable front cover for access to the interior of the headstock for repairs. The gear train in such known lathes comprises several gear shafts, including the shaft of the headstock working-spindle situated in the first position in relation to the front of the machine, and a shaft for change of speed, all of which are vertical and meshed in succession from front to back, under the frame.

In case of repair or replacement of some element of the gearbox, the front of the machine frame is released and removed in order to take out the gear train with a hoist, for repair outside the machine. It is unlikely that a hoist will be available on the lathe site for the removal upward of the gear train and this is, furthermore, a costly task since the entire machine frame has to be dismantled.

EP-517387 describes an adaptor for a rotating tool holder with part of the casing containing a transmission gear which can be separated from the headstock.

### DISCLOSURE OF THE INVENTION

The object of the invention is a gearbox which can be divided in two for lathes and milling machines, as defined in claim 1, including the gear train and the gearbox casing, one of the parts of which can be separated and removed for repairs to the gearbox.

The shaft of the headstock spindle has a gear wheel coupled with a second transmission shaft and, for repairs, both shafts remain immobile inside the front half of the casing, of the headstock, since access to its components is easy through a front headstock cover. On the other hand, the drive shaft and gearbox shaft are located behind the headstock under the machine frame and it is not possible to access them without removing them.

For repairs to or maintenance of the gearbox, to overcome the problem of access to the gear train, part of the casing can be separated from the part of the headstock casing and can be manually removed from the machine. The separable half of the gearbox incorporates devices for sliding it out of the machine with the aid of support elements on the machine bed, and the means to pivot it subsequently in order to provide a view of free access to the interior.

### DESCRIPTION OF THE DRAWINGS

FIGURE 1 is a transverse cross-section view of the gear box according to the invention.

FIGURE 2 is a side elevation view of the lathe, with the gearbox in figure 1.

FIGURE 3 is a side elevation view of the lathe in figure 2, showing part of the gearbox separated and taken out of the machine.

### DETAILED DESCRIPTION OF THE INVENTION

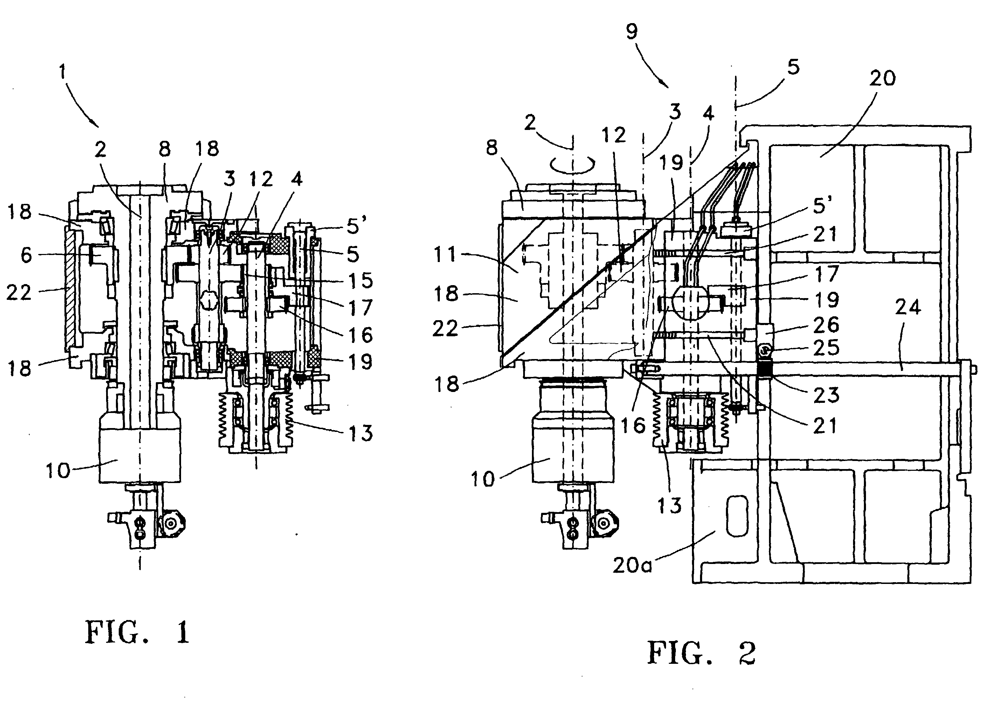

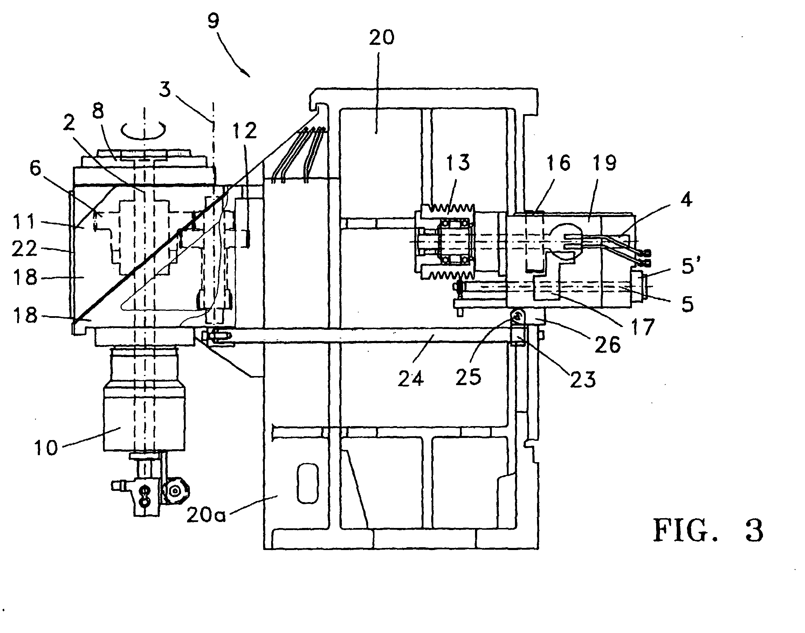

The gearbox 1 shown in figure 1 is an embodiment of the invention, it has four shafts 2,3,4,5 of respective gear wheels 6,12,15,16 to transmit the rotation movement to the shaft of the headstock spindle 8 which is fixed to the vertical lathe shown in figures 2 and 3, and the chuck, not shown, is located at the top of the work-piece headstock, with the cylinder 10 to drive the grips at the bottom of the spindle 8.

The first gear shaft 2 of the spindle is located inside the work-piece headstock on the front of the lathe and has a wheel 6 coupled which meshes with the second transmission shaft 3. The other shafts 3,4,5 of the gear train are located successively one after the other to the back of the lathe and, of these, the second shaft 3 is a transmission shaft with a pinion 12 to drive the shaft 2 of the spindle, while the third shaft 4, with two drive pinions 15, 16 for the transmission of different speeds, is the drive shaft moved by a pulley 13 and belt set, and the fourth shaft 5 belongs to a hydraulic cylinder 5' that drives a device 17 which makes the drive pinions 15, 16 slide to change gear.

The shaft 2 of the spindle and the transmission shaft 3 are housed inside the half 18 of the casing of the gearbox 1 while the drive shaft 4 and shaft 5 of the gearbox are housed inside the rear half 19 of said gearbox. The two halves 18 and 19 of the gearbox 1 casing are coupled and joined by a set of bolts 21, the half casing 18 housing the headstock is fixed to the front 20a of the lathe bed 20 and has a front cover 22 whose entrance provides access to gears 6 and 12 of the spindle and transmission shafts, while half-casing 19 of the two rear shafts 4 and 5 can be removed by releasing the bolts 21, being supported on two pairs of bearings 23 by means of which it slides toward the rear of the lathe along two slide guide-bars 24 supported on the bed 20. Once the casing 19 has been removed from the lathe, it is rotated one quarter turn on a pivot 25 linked to the rear bearings 23 by means of the pivoting arm 26, to reveal the gears 15, 16 of the drive shaft 4 and the gearbox shaft 5, for repair.

## Claims

1. A divisible gearbox for work-piece headstocks on a vertical lathe or milling machine, comprising a set of gear shafts (2,3,4,5) in succession which includes at least the shaft (2) of the spindle (8) and a drive shaft (3), which are housed inside a casing (18,19) of the gearbox (1) attached to the machine bed (20), **characterised in that** the gearbox (1) is dividable in two parts, one part (4,5,13,19) of them removable including the drive shaft (4) and its corresponding casing (19), is able to be separated from the work-piece headstock, and is provided with means (23,24) for sliding and guiding on the housing (19) to be detached from the machine, and with means (25, 26) for pivoting to allow free access to all the gear shafts (2,3,4,5).

2. The divisible gearbox of claim 1, wherein the means (23,24) for sliding said separable casing and gear shaft part (4,5,13,19) are a pair of support bars (24) fitted with bearings (23), and the means (25,26) for pivoting the removable casing (19) are a pair of pivoting arms (26) secured to the casing (19) and a pivot (25) coupled to the bearings (23).

## Patentansprüche

1. Teilbarer Getriebekasten für Teilköpfe in vertikalen Drehbänken und Fräsmaschinen, der einen Satz hintereinander angeordneter Wellen (2,3,4,5) umfasst, der zumindest eine Welle (2) der Spindel (8) und eine Antriebswelle (3) enthält, welche im Innern eines Gehäuses (18,19) des am Maschinenbett (20) befestigten Getriebekastens (1) angeordnet sind, **dadurch gekennzeichnet, dass** der Getriebekasten (1) in zwei Teile geteilt werden kann, von denen der eine (4,5,13,19), der eine Antriebswelle (4) und das entsprechende Gehäuse (19) enthält, vom Kopf gelöst werden kann und am Gehäuse (19) mit Gleit- und Führungsmitteln (23,24) für die Herausnahme aus der Maschine, sowie mit Schwenkmitteln (25,26) versehen ist, um den freien Zugang zu allen Getriebewellen (2,3,4,5) zu ermöglichen.

2. Teilbarer Getriebekasten nach Anspruch 1, wobei die Gleitmittel (23,24) für das Gehäuse und die Getriebewellen (4,5,13,19) zwei mit Lagern (23) versehene Stützstangen (24), und die Drehmittel (25,26) des lösbaren Gehäuses (19) zwei am Gehäuse befestigte Schwenkarme (26) und ein an den Lagern (23) angekoppelter Zapfen (25) sind.

## Revendications

1. Boîte de vitesse divisible pour poupées porte-pièce dans des tours et fraiseuses verticales, comprenant un jeu d'essieux (2, 3, 4, 5) d'engrenages successifs qui comporte au moins l'essieu (2) de la broche (8) et un essieu (3) moteur logés à l'intérieur d'une carcasse (18, 19) de la boîte (1) de vitesse fixée au banc (20) de la machine, **caractérisée en ce que** la boîte (1) de vitesse est divisible en deux parties, dont une (4, 5, 13, 19) qui comprend l'essieu (4) moteur et sa carcasse (19) correspondante est séparable de la poupée porte-pièce, et est pourvue de moyens (23, 24) de coulissement et de guidage sur sa carcasse (19) pour être retirée de la machine, et de moyens (25, 26) de pivotement pour permettre d'accéder librement à tous les essieux (2, 3, 4, 5) d'engrenages.

2. La boîte de vitesse divisible de la revendication 1 où les moyens (23, 24) pour le glissement de ladite carcasse et des essieux d'engrenages (4, 5, 13, 19) sont deux barres (24) de support pourvues de paliers (23) et les moyens (25, 26) de pivotement de la carcasse (19) séparable sont deux bras (26) de pivotement fixés à la carcasse (19) et un pivot (25) accouplé aux paliers (23).
